# EUROPÄISCHE PATENTSCHRIFT

(11) **EP 3 963 699 B1**
(45) Veröffentlichungstag und Bekanntmachung des Hinweises auf die Patenterteilung: **25.06.2025**
(21) Anmeldenummer: 20732742.0
(22) Anmeldetag: 25.05.2020
(51) Int. Cl.: H02K 11/33, H02K 5/22, H02K 7/06, H02K 7/14, H01R 12/58, H01R 12/91

(54) **KONTAKTSTIFT, TRÄGERPLATTE UND ELEKTRISCHE MASCHINE**
CONTACT PIN, CARRIER PLATE AND ELECTRIC MACHINE
BROCHE DE CONTACT, PLAQUE DE SUPPORT ET MACHINE ÉLECTRIQUE

(30) Priorität: 29.05.2019 AT 504962019
(43) Veröffentlichungstag der Anmeldung: 09.03.2022
(73) Patentinhaber: MELECS EWS GmbH, 7011 Siegendorf (AT)
(72) Erfinder: HELLINGER, Leopold, 3710 Ziersdorf (AT); KÄFER, Michael, 1090 Wien (AT); NEUMANN, Philipp, 3231 St. Margarethen an der Sierning (AT); KULAWIK, Thomas, 1100 Wien (AT); NEMETH, Herbert, 1100 Wien (AT)
(74) Vertreter: Maier, Daniel Oliver
(86) Internationale Anmeldenummer: PCT/EP2020/064389
(87) Internationale Veröffentlichungsnummer: WO 2020/239666

(56) Entgegenhaltungen:
- EP-A1- 1 919 035
- WO-A1-2006/004335
- DE-A1- 102012 223 431
- DE-A1- 102017 209 626
- DE-A1- 102017 216 807
- DE-A1- 102017 218 182
- US-A1- 2009 108 688
- US-A1- 2017 200 704

## Beschreibung

Die Erfindung betrifft einen Kontaktstift für eine elektrische Maschine, bei welchem zumindest ein erster Bauteil-Längsabschnitt und ein zweiter Bauteil-Längsabschnitt vorgesehen sind.

Insbesondere in der Fahrzeugelektronik besteht häufig die Notwendigkeit, Geräte mit Steuerelektronik in einen Motor, in ein Getriebe etc. zu integrieren, um begrenzte Einbauräume möglichst gut zu nutzen und um Leitungswege kurz zu halten. Schnittstellenbauteile wie Kontaktstifte etc. sind dabei hohen Belastungen ausgesetzt.

Aus dem Stand der Technik ist beispielsweise die WO 2018/114349 A1 bekannt, in welcher eine elektrische Maschine mit einer Kühlvorrichtung offenbart ist. Mit einer Trägerplatte ist ein Steckverbinder verbunden. Es ist jedoch nicht ersichtlich, inwieweit dieser Steckverbinder im Hinblick auf mögliche Relativbewegungen zwischen dem Steckverbinder und damit gegebenenfalls verbundenen Geräten belastungsgerecht ausgelegt ist.

Weiterhin zeigt die US 2017/0200704 A1 ein Halbleitergerät mit mehrschichtigen Trägerplatten und Kontaktstiften, welche Abschnitte mit geringer Steifigkeit aufweisen.

Die DE 10 2017 218 182 A1 offenbart ein elektrisch leitfähiges Kontaktelement, bei dem zwischen einem ersten Kontaktabschnitt und einem zweiten Kontaktabschnitt ein wellenförmiger Verformungsabschnitt angeordnet ist.

In der US 2009/0108688 A1 ist eine Verbindungsstruktur zur Verbindung eines elektrischen Geräts mit einer Versorgungseinheit beschrieben. Die Verbindungsstruktur umfasst ein Verbindungsmittel mit einem verformbaren Abschnitt zum Ausgleich von Ausrichtungsfehlern zwischen der Versorgungseinheit und einer Sammelschiene.

Ferner zeigt die DE 10 2012 223 431 A1 ein Gehäuse für eine elektrische Maschine mit Steckkontakten, welche mäanderförmige Abschnitte aufweisen.

Der Erfindung liegt die Aufgabe zugrunde, einen Kontaktstift anzugeben, welcher eine hohe Eignung für lokal unterschiedliche mechanische und/oder thermische Belastungen aufweist.

Erfindungsgemäß wird diese Aufgabe gelöst mit einem Kontaktstift der eingangs genannten Art, bei welchem der zweite Bauteil-Längsabschnitt sich in Richtung seiner Längsachse verjüngend ausgeführt ist und eine Mehrzahl an Ausnehmungen aufweist, wodurch der erste Bauteil-Längsabschnitt eine größere Steifigkeit aufweist als der zweite Bauteil-Längsabschnitt.

Dadurch wird ein geringer Kontaktzonenverschleiß zwischen dem Kontaktstift und mit diesem verbundenen Bauteilen oder Geräten bei zugleich günstigen Montageeigenschaften bewirkt. Der erste Bauteil-Längsabschnitt des Kontaktstifts ist steif ausgeführt, um ihn mit beispielsweise in eine Trägerplatte einpressen zu können.

Der zweite Bauteil-Längsabschnitt des Kontaktstifts ist weniger steif als der erste Bauteil-Längsabschnitt und kann sich, je nach auf ihn einwirkenden Belastungen (z.B. mechanische Belastungen aufgrund von Relativbewegungen zwischen mit dem Kontaktstift verbundenen Bauteilen oder thermische Belastungen aufgrund einer Wärmeübertragung von den verbundenen Bauteilen auf den Kontaktstift), elastisch verformen.

Je nach Art der Belastungen kann die größere Steifigkeit des ersten Bauteil-Längsabschnitts bzw. die geringere Steifigkeit des zweiten Bauteil-Längsabschnitts beispielsweise eine Biegesteifigkeit und/oder eine Torsionssteifigkeit etc. sein. Eine geringe Steifigkeit des zweiten Bauteil-Abschnitts wird dadurch erreicht, dass dieser die Mehrzahl an Ausnehmungen aufweist. Eine geringe Steifigkeit des zweiten Bauteil-Abschnitts kann ferner beispielsweise dadurch erreicht werden, dass dieser mehrfach gegenläufig gekrümmt ausgeführt ist und/oder mehrfach geschlitzt etc. ausgeführt ist.

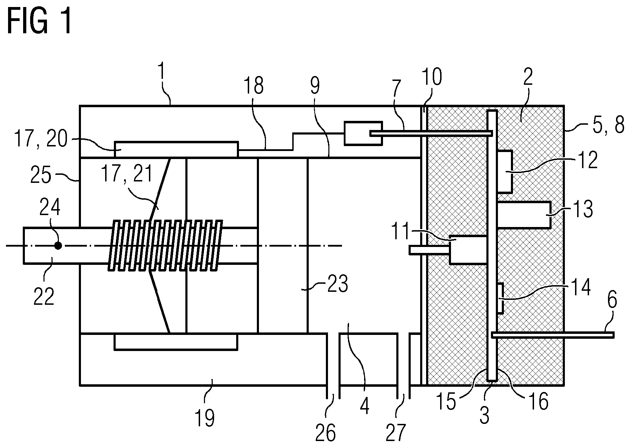

Fig. 1 zeigt eine beispielhafte Ausführungsvariante einer erfindungsgemäßen elektrischen Maschine in geschnittener Darstellung.

Eine als elektronischer Regler 5 ausgebildete Steuerungs- oder Regelungseinheit weist eine Trägerplatte 3 auf, welche, von einer wärmeleitfähigen Vergussmasse 2 aus Polyurethan vollständig umgossen, in einem ersten Gehäuse 8, welches in mit Glasfasern verstärktem Polyamid ausgebildet ist, angeordnet ist.

Auf der Trägerplatte 3 sind ein erstes Bestückungselement 11, welches als Drucksensor ausgebildet ist, sowie ein zweites Bestückungselement 12, ein drittes Bestückungselement 13 und ein viertes Bestückungselement 14 vorgesehen, welche von der Vergussmasse 2 ummantelt sind. Das erste Bestückungselement 11 ist auf einer Unterseite 15 der Trägerplatte 3, das zweite Bestückungselement 12, das dritte Bestückungselement 13 und das vierte Bestückungselement 14 auf einer Oberseite 16 der Trägerplatte 3 angeordnet. Die Trägerplatte 3 ist also beidseitig bestückt.

Das erste Gehäuse 8 und die Trägerplatte 3 sind zylindrisch ausgeführt. Das erste Gehäuse 8 ist stirnseitig mittels einer eingesetzten Platte 10 abgeschlossen. Die Platte 10 ist mit dem ersten Gehäuse 8 verklemmt.

Die Vergussmasse 2 füllt einen von dem ersten Gehäuse 8 und der Platte 10 gebildeten Gehäuseinnenraum vollständig aus. Das Polyurethan der Vergussmasse 2 weist eine Shore-A-Härte im Bereich zwischen 48 bis 53, eine Wärmeleitfähigkeit von 0,97 W/mK und eine Glastemperatur von ca. -60 °C auf. Die elektrische Maschine kann daher in einem großen Temperaturbereich eingesetzt werden.

Bei einer Ausführung der Vergussmasse 2 in Polyurethan handelt es sich um eine günstige Lösung. Erfindungsgemäß ist es jedoch auch vorstellbar, die Vergussmasse 2 in Silikon mit einer Shore-A-Härte im Bereich zwischen 45 und 55 auszubilden, wodurch mit der Ausführung in Polyurethan vergleichbare Eigenschaften der Vergussmasse 2 erreicht werden.

Im Bereich der Oberseite 16 der Trägerplatte 3 ist ein als erster Silber-Kontaktstift ausgebildeter erster Kontaktstift 6 mit der Trägerplatte 3 verbunden und ragt aus dem ersten Gehäuse 8 heraus. Über diesen ersten Kontaktstift 6 sowie in Fig. 1 nicht sichtbare weitere Kontaktstifte, die ebenfalls als Silber-Kontaktstifte ausgeführt sind, im Bereich der Oberseite 16 mit der Trägerplatte 3 verbunden sind und aus dem ersten Gehäuse 8 herausragen, ist die Trägerplatte 3 mit einer nicht dargestellten Stromversorgung verbunden.

Im Bereich der Unterseite 15 der Trägerplatte 3 sind ein als zweiter Silber-Kontaktstift ausgeführter zweiter Kontaktstift 7 sowie in Fig. 1 nicht sichtbare, als weitere Silber-Kontaktstifte ausgebildete weitere Kontaktstifte mit der Trägerplatte 3 verbunden.

Über den zweiten Kontaktstift 7 und die im Bereich der Unterseite 15 der Trägerplatte 3 angeordneten weiteren Kontaktstifte ist der Regler 5 mit einem Motor 17 eines als Hydraulikaktuator ausgebildeten fluidischen Aktuators 1 verbunden.

Der Regler 5 ist über eine Klemmverbindung mit dem Aktuator 1 verbunden. Erfindungsgemäß ist es jedoch auch vorstellbar, Schraubenverbindungen zwischen dem Regler 5 und dem Aktuator 1 vorzusehen.

Der erste Kontaktstift 6, der zweite Kontaktstift 7 und die weiteren Kontaktstifte sind teilweise von der Vergussmasse 2 ummantelt.

Zwischen dem zweiten Kontaktstift 7 und dem Motor 17 ist ein erster Leitungsweg 18 vorgesehen, zwischen den im Bereich der Unterseite 15 der Trägerplatte 3 angeordneten weiteren Kontakten nicht sichtbare weitere Leitungswege.

Der erste Leitungsweg 18 und die weiteren Leitungswege sind innerhalb des Aktuators 1, in einem Ringteil 19 des Aktuators 1 angeordnet. Zwischen dem Regler 5 und dem Aktuator 1 verlaufende Kabel sind nicht erforderlich.

Der Aktuator 1 bzw. dessen Ringteil 19 ist bündig an die Steuerungs- oder Regelungseinheit angeschlossen bzw. schließt bündig mit dem ersten Gehäuse 8 ab.

Der Motor 17 ist als bürstenloser Gleichstrom-Elektromotor mit einem ringförmigen Stator 20 und einem Rotor 21 ausgebildet. Der Stator 20 ist in dem Ringteil 19 des Aktuators 1 vorgesehen. Über den Stator 20 bzw. dessen Verbindung mit dem Regler 5 wird der Rotor 21, welcher drehbar, aber unverschieblich in dem Aktuator 1 gelagert ist, angetrieben.

Drehbewegungen des Rotors 21 werden auf einen spindelförmigen Abschnitt einer Kolbenstange 22 übertragen, wodurch die Kolbenstange 22 und ein mit dieser verbundener Kolben 23 Translationsbewegungen in Richtung einer Längsachse 24 ausführen.

Die Kolbenstange 22 und der Kolben 23 sind in einem Zylinder 25 des Aktuators 1 vorgesehen, welcher von dem Ringteil 19 ummantelt ist. Die Kolbenstange 22 ist über ein nicht gezeigtes Lager in dem Zylinder 25 gelagert und geführt, so dass sie Rotations- und Translationsbewegungen ausführen kann.

Zwischen der Kolbenstange 22 und dem Zylinder 25 ist eine ebenfalls nicht dargestellte erste Dichtung vorgesehen, um ein Eindringen von Feuchtigkeit und Partikeln etc. in den Zylinder 25 zu verhindern.

Eine Kammer 4, welche von dem beweglichen Kolben 23 und dem Zylinder 25 gebildet ist, ist mit einem Hydraulikfluid gefüllt. Der Zylinder 25 fungiert daher als zweites Gehäuse 9 in Bezug auf dieses Hydraulikfluid.

Die Kammer 4 bzw. das zweite Gehäuse 9 grenzt unmittelbar an die Platte 10 des Reglers 5. Die Steuerungs- oder Regelungseinheit kontaktiert die Kammer 4 im Bereich der Vergussmasse 2.

Dadurch wird von der Trägerplatte 3 bzw. dem ersten Bestückungselement 11, dem zweiten Bestückungselement 12, dem dritten Bestückungselement 13 und/oder dem vierten Bestückungselement 14 in die Vergussmasse 2 übertragene Wärme von der Vergussmasse 2 über die Platte 10 in die Kammer 4, d.h. an das Hydraulikfluid abgeführt.

Erfindungsgemäß ist es auch möglich, auf die Platte 10 zu verzichten, wodurch die Vergussmasse 2 unmittelbar an die Kammer 4 angrenzt.

Die Kammer 4 ist über eine erste Hydraulikleitung 26 mit einem nicht gezeigten Hydraulikbehälter verbunden, d.h. über diesen Hydraulikbehälter mit Hydraulikfluid versorgt.

Über eine zweite Hydraulikleitung 27 ist die Kammer 4 mit einem ebenfalls nicht dargestellten hydraulischen Teleskopstoßdämpfer eines Kraftfahrzeugs verbunden. Mittels des Kolbens 23 bzw. eines Drucks des Hydraulikfluids wird eine Dämpfungswirkung des Teleskopstoßdämpfers eingestellt. Hierzu wird mittels des Drucksensors bzw. des ersten Bestückungselements 11, dessen Messsonde in die Kammer 4 ragt, laufend der Druck in der Kammer 4 gemessen.

Zwischen dem ersten Bestückungselement 11 und dem Zylinder 25 ist eine nicht dargestellte zweite Dichtung vorgesehen, um eine Benetzung der Vergussmasse 2 mit Hydraulikfluid zu verhindern.

Mittels des Reglers 5 erfolgt laufend ein Abgleich des gemessenen Drucks mit einem definierten Soll-Druck. Auf Basis einer Differenz zwischen dem gemessenen Druck und dem Soll-Druck wird der Motor 17 von dem Regler 5 über entsprechende Spannungsvorgaben an den Stator 20 geregelt, d.h. der Motor 17 wird ein- oder ausgeschaltet oder es wird eine Drehzahl des Rotors 21 eingestellt, um mittels entsprechender Kolbenstellungen und -Bewegungen den Soll-Druck in dem Hydraulikfluid bzw. in dem Teleskopstoßdämpfer zu erreichen bzw. zu halten.

Bei der Ausführung des Aktuators 1 als Hydraulikaktuator handelt es sich um eine günstige Lösung. Erfindungsgemäß ist es jedoch auch denkbar, den Aktuator 1 beispielsweise als Pneumatikaktuator auszubilden und diesen zur Einstellung von Bremszylinderdrücken in einer Drehgestellbremse eines Schienenfahrzeugs einzusetzen.

Weiterhin ist es vorstellbar, dass die Steuerungs- oder Regelungseinheit nicht als Regler 5, sondern als Steuereinheit, d.h. ohne Messungen einer zu steuernden Größe mittels eines Sensors bzw. ohne Rückwirkung dieser Größe auf eine Stellgröße, einzusetzen. Beispielsweise kann die Steuereinheit in einer hydraulischen Spanneinrichtung eingesetzt sein.

In diesem Zusammenhang ist auch eine Ausführung der Steuerungs- oder Regelungseinheit als Steuergerät (Electronic Control Unit, ECU) denkbar.

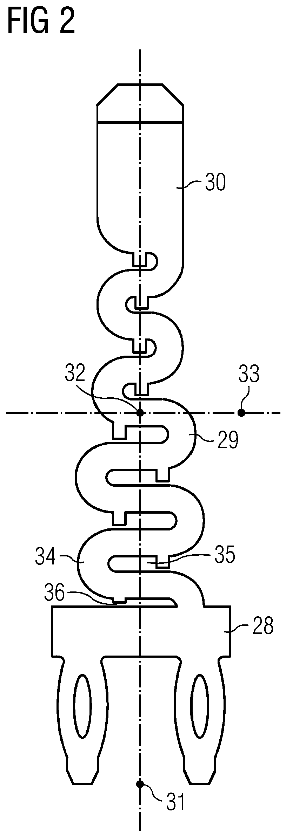

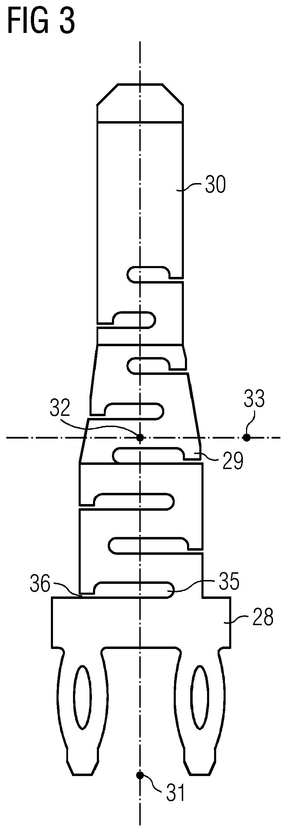

Der zweite Kontaktstift 7 ist über einen in Fig. 2 und Fig. 3 gezeigten ersten Bauteil-Längsabschnitt 28 mit der Trägerplatte 3 und über einen sich an einen zweiten Bauteil-Längsabschnitt , ebenfalls in Fig. 2 und Fig. 3 sichtbar, unmittelbar anschließenden dritten Bauteil-Längsabschnitt 30, der in Fig. 2 und Fig. 3 dargestellt ist, mit dem Ringteil 19 des Aktuators 1, d.h. mit einer von der Trägerplatte 3 verschiedenen Komponente der elektrischen Maschine, verbunden. Der erste Bauteil-Längsabschnitt 28 weist eine größere Steifigkeit als der zweite Bauteil-Längsabschnitt 29 auf.

Erfindungsgemäß ist es auch vorstellbar, dass der zweite Bauteil-Längsabschnitt 29 mit dem Ringteil 19 verbunden ist.

In Fig. 2 ist eine erste beispielhafte Ausführungsvariante eines erfindungsgemäßen Kontaktstifts dargestellt, welche auch in Fig. 1 gezeigt wird (als zweiter Kontaktstift 7). Dieser Kontaktstift weist einen ersten Bauteil-Längsabschnitt 28, einen zweiten Bauteil-Längsabschnitt 29 sowie einen dritten Bauteil-Längsabschnitt 30 auf, welche in Richtung einer Längsachse 31 ausgerichtet sind.

Der erste Bauteil-Längsabschnitt 28 weist eine größere Steifigkeit auf als der zweite Bauteil-Längsabschnitt 29. Bei dieser größeren Steifigkeit handelt es sich um eine Biegesteifigkeit und zugleich um eine Torsionssteifigkeit.

Zu einem vorteilhaften elastischen Bauteilverhalten bzw. Steifigkeitsverhalten trägt bei, dass der zweite Bauteil-Längsabschnitt 29 einerseits sich in Richtung der Längsachse 31 bzw. seiner Längsachse 31 verjüngend ausgeführt ist und andererseits mehrfach gegenläufig gekrümmt ausgeführt ist. Es sind ein erster Bogen 34 sowie weitere Bögen vorgesehen, welche jeweils um 90° bzw. um 180° bezüglich einer in Fig. 2 projizierend erscheinenden Hochachse 32 des zweiten Bauteil-Längsabschnitts 29 gekrümmt ausgebildet sind.

Weiterhin sind zur Verbesserung der elastischen Eigenschaften des Kontaktstifts eine erste Ausnehmung 35 sowie weitere Ausnehmungen, d.h. eine Mehrzahl an Ausnehmungen, in dem zweiten Bauteil-Längsabschnitt 29 in Richtung von dessen Hochachse 32 vorgesehen.

Ferner ist der zweite Bauteil-Längsabschnitt 29 mehrfach geschlitzt ausgeführt, d.h. es sind in Richtung einer Querachse 33 des zweiten Bauteil-Längsabschnitts 29 ein erster Schlitz 36 sowie weitere Schlitze vorgesehen.

Der erste Bauteil-Längsabschnitt 28 schließt sich unmittelbar an den zweiten Bauteil-Längsabschnitt 29 an und ist als Stecker ausgebildet, welcher in eine in Fig. 1 gezeigte Trägerplatte 3 eingepresst ist.

Der dritte Bauteil-Längsabschnitt 30 schließt sich unmittelbar an den zweiten Bauteil-Längsabschnitt 29 an, ist teils quaderförmig ausgeführt und weist teilweise abgeschrägte Kanten auf. Über den dritten Bauteil-Längsabschnitt 30 ist der Kontaktstift mit einem in Fig. 1 dargestellten Ringteil 19 eines Aktuators 1 verbunden.

Fig. 3 zeigt eine zweite beispielhafte Ausführungsvariante eines erfindungsgemäßen Kontaktstifts. Dieser Kontaktstift ist ähnlich wie jene erste beispielhafte Ausführungsvariante eines erfindungsgemäßen Kontaktstifts, die in Fig. 2 dargestellt ist, ausgeführt. Es werden daher in Fig. 3 weitestgehend gleiche Bezugszeichen wie in Fig. 2 verwendet.

Im Unterschied zu Fig. 2 weist ein zweiter Bauteil-Längsabschnitt 29 des Kontaktstifts an seinen Außenseiten keine ausgeprägten Krümmungen bzw. Bögen auf. Dadurch werden fertigungstechnische Vereinfachungen erzielt.

### Liste der Bezeichnungen

- 1: Aktuator
- 2: Vergussmasse
- 3: Trägerplatte
- 4: Kammer
- 5: Regler
- 6: Erster Kontaktstift
- 7: Zweiter Kontaktstift
- 8: Erstes Gehäuse
- 9: Zweites Gehäuse
- 10: Platte
- 11: Erstes Bestückungselement
- 12: Zweites Bestückungselement
- 13: Drittes Bestückungselement
- 14: Viertes Bestückungselement
- 15: Unterseite
- 16: Oberseite
- 17: Motor
- 18: Erster Leitungsweg
- 19: Ringteil
- 20: Stator
- 21: Rotor
- 22: Kolbenstange
- 23: Kolben
- 24: Längsachse
- 25: Zylinder
- 26: Erste Hydraulikleitung
- 27: Zweite Hydraulikleitung
- 28: Erster Bauteil-Längsabschnitt
- 29: Zweiter Bauteil-Längsabschnitt
- 30: Dritter Bauteil-Längsabschnitt
- 31: Längsachse
- 32: Hochachse
- 33: Querachse
- 34: Erster Bogen
- 35: Erste Ausnehmung
- 36: Erster Schlitz

## Patentansprüche

1. Kontaktstift für eine elektrische Maschine, bei welchem zumindest ein erster Bauteil-Längsabschnitt (28) und ein zweiter Bauteil-Längsabschnitt (29) vorgesehen sind, **dadurch gekennzeichnet, dass** der zweite Bauteil-Längsabschnitt (29) sich in Richtung seiner Längsachse (31) verjüngend ausgeführt ist und eine Mehrzahl an Ausnehmungen aufweist, wodurch der erste Bauteil-Längsabschnitt (28), welcher als Zweistiftstecker ausgebildet ist, eine größere Biegesteifigkeit und zugleich eine größere Torsionssteifigkeit aufweist als der zweite Bauteil-Längsabschnitt (29).

2. Kontaktstift nach Anspruch 1, **dadurch gekennzeichnet, dass** die größere Steifigkeit eine größere Biegesteifigkeit ist.

3. Kontaktstift nach Anspruch 1 oder 2, **dadurch gekennzeichnet, dass** die größere Steifigkeit eine Torsionssteifigkeit ist.

4. Kontaktstift nach einem der Ansprüche 1 bis 3, **dadurch gekennzeichnet, dass** der zweite Bauteilabschnitt (29) mehrfach gegenläufig gekrümmt ausgeführt ist.

5. Kontaktstift nach einem der Ansprüche 1 bis 4, **dadurch gekennzeichnet, dass** der zweite Bauteilabschnitt (29) mehrfach geschlitzt ausgeführt ist.

6. Kontaktstift nach einem der Ansprüche 1 bis 5, **dadurch gekennzeichnet, dass** der erste Bauteil-Längsabschnitt (28) mit einer Trägerplatte (3) einer elektrischen Maschine verbindbar ist.

7. Kontaktstift nach einem der Ansprüche 1 bis 6, **dadurch gekennzeichnet, dass** der zweite Bauteil-Längsabschnitt (29) oder ein sich an den zweiten Bauteil-Längsabschnitt (29) anschließender dritter Bauteil-Längsabschnitt (30) mit einer von der Trägerplatte (3) verschiedenen Komponente der elektrischen Maschine verbindbar ist.

8. Trägerplatte mit zumindest einem Kontaktstift nach einem der Ansprüche 1 bis 7.

9. Elektrische Maschine mit zumindest einem Kontaktstift nach einem der Ansprüche 1 bis 7.

## Claims

1. Contact pin for an electric machine, in which at least one first component longitudinal portion (28) and one second component longitudinal portion (29) are provided, **characterized in that** the second component longitudinal portion (29) is embodied in a manner narrowing in the direction of its longitudinal axis (31) and has a plurality of recesses, as a result of which the first component longitudinal portion (28), which is in the form of a two-pin plug, has greater flexural rigidity and at the same time greater torsional rigidity than the second component longitudinal portion (29).

2. Contact pin according to Claim 1, **characterized in that** the greater rigidity is greater flexural rigidity.

3. Contact pin according to Claim 1 or 2, **characterized in that** the greater rigidity is torsional rigidity.

4. Contact pin according to one of Claims 1 to 3, **characterized in that** the second component portion (29) is embodied in a manner bent multiply in opposite directions.

5. Contact pin according to one of Claims 1 to 4, **characterized in that** the second component portion (29) is embodied in a multiply slotted manner.

6. Contact pin according to one of Claims 1 to 5, **characterized in that** the first component longitudinal portion (28) is connectable to a support plate (3) of an electric machine.

7. Contact pin according to one of Claims 1 to 6, **characterized in that** the second component longitudinal portion (29) or a third component longitudinal portion (30) adjoining the second component longitudinal portion (29) is connectable to a component, other than the support plate (3), of the electric machine.

8. Support plate having at least one contact pin according to one of Claims 1 to 7.

9. Electric machine having at least one contact pin according to one of Claims 1 to 7.

## Revendications

1. Broche de contact pour une machine électrique, sur laquelle sont prévues au moins une première section longitudinale de pièce (28) et une deuxième section longitudinale de pièce (29), **caractérisée en ce que** la deuxième section longitudinale de pièce (29) est réalisée en se rétrécissant dans la direction de son axe longitudinal (31) et présente une pluralité de cavités, de sorte que la première section longitudinale de pièce (28), qui est constituée comme un connecteur à deux pôles, présente une plus grande rigidité en flexion et en même temps une plus grande rigidité en torsion que la deuxième section longitudinale de pièce (29).

2. Broche de contact selon la revendication 1, **caractérisée en ce que** la plus grande rigidité est une rigidité en flexion.

3. Broche de contact selon la revendication 1 ou 2, **caractérisée en ce que** la plus grande rigidité est une rigidité en torsion.

4. Broche de contact selon l'une des revendications 1 à 3, **caractérisée en ce que** la deuxième section longitudinale de pièce (29) est réalisée courbée plusieurs fois en directions opposées.

5. Broche de contact selon l'une des revendications 1 à 4, **caractérisée en ce que** la deuxième section longitudinale de pièce (29) est réalisée segmentée plusieurs fois.

6. Broche de contact selon l'une des revendications 1 à 5, **caractérisée en ce que** la première section longitudinale de pièce (28) peut être liée à une plaque de support (3) d'une machine électrique.

7. Broche de contact selon l'une des revendications 1 à 6, **caractérisée en ce que** la deuxième section longitudinale de pièce (29) ou une troisième section longitudinale de pièce (30) qui se raccorde à la deuxième section longitudinale de pièce (29) peut être liée à un composant différent de la plaque de support (3) de la machine électrique.

8. Plaque de support avec au moins une broche de contact selon l'une des revendications 1 à 7.

9. Machine électrique avec au moins une broche de contact selon l'une des revendications 1 à 7.
